# EUROPEAN PATENT SPECIFICATION

(11) **EP 2 471 258 B1**
(45) Date of publication and mention of the grant of the patent: **24.05.2017**
(21) Application number: 09782167.2
(22) Date of filing: 25.08.2009
(51) Int. Cl.: H04N 5/33, H04N 9/04, G06T 5/00

(54) **REDUCING NOISE IN A COLOR IMAGE**
GERÄUSCHVERRINGERUNG IN EINEM FARBBILD
RÉDUCTION DU BRUIT DANS UNE IMAGE EN COULEURS

(43) Date of publication of application: 04.07.2012
(73) Proprietor: Dual Aperture International Co. Ltd., Daehak-ro Yuseong-gu, Daejeon (KR)
(72) Inventor: WAJS, Andrew, Augustine, NL-2023 AA Haarlem (NL)
(74) Representative: De Vries & Metman
(86) International application number: PCT/EP2009/060936
(87) International publication number: WO 2011/023224

(56) References cited:
- US-A1- 2005 088 550
- US-A1- 2006 182 364
- US-A1- 2007 183 680
- US-A1- 2009 175 535
- US-B1- 6 292 212
- E. P. BENNETT ET AL.: "Multispectral bilateral video fusion" IEEE TRANSACTIONS ON IMAGE PROCESSING May 2007 (2007-05), pages 1185-1194, XP002581364 Retrieved from the Internet: URL:http://www.znu.ac.ir/data/members/fazl i_saeid/DIP/Paper/ISSUE5/04154781.pdf> [retrieved on 2010-05-06]
- DAVID L GILBLOM ET AL: "Operation and performance of a color image sensor with layered photodiodes", PROCEEDINGS OF SPIE, vol. 5074, 30 September 2003 (2003-09-30), XP055158031, ISSN: 0277-786X, DOI: 10.1117/12.498557

## Description

### Field of the invention

The invention relates to reducing noise in a color image, and, in particular, though not exclusively, to a method and a system for providing a low-noise color image, an image processing apparatus and an image sensor for use in such system and a computer program product using such method.

### Background of the invention

Conventional digital cameras use filters, e.g. a color filter array (CFA) interposed between the lens and the image sensor and an infrared blocking filter before the lens in order to reproduce a color image which matches the real scene as much as possible. The use of filters however reduces the amount of light reaching the image sensor thereby substantially degrading the signal-to-noise ratio (SNR) of the camera. Moreover, current trends in digital camera technology such as increasing the sensor resolution by reducing the pixel size and the desire to obtain improved image quality at higher ISO sensitivities for capturing images in low light conditions, may result in further degradation of the SNR.

Measures for increasing the SNR such as exposing the image sensor to more light using longer exposure times or a larger aperture may lead to motion blur and/or reduced depth of field (DOF) and thus do not provide a real improvement. A further option would be to increase the ISO speed (i.e. increasing the gain of the image sensor). Increasing the ISO speed however significantly increases the image noise. Hence, techniques to reduce noise become increasingly important in order to improve or at least maintain the SNR at a desired level at low light conditions and/or when using image sensors with reduced pixel size.

One way of improving the SNR of a digital camera may be the use of an image sensor with extended spectral sensitivity. For example US2007/0153335 describes the use of an image sensor comprising RGB pixels and non-filtered (transparent) pixels. The signals of the transparent pixels are used in a noise reduction scheme, wherein the relatively high-noise RGB pixel signals are filtered on the basis of edge information comprised in the transparent pixel signal. The noise reduction scheme however is rather complex and relies on edge-preserving filtering. The problem related to the use of an edge-preserving filter (e.g. a median filter, a bilateral filter, etc.) is that for details that are not associated with a hard or clear edge, such filter ultimately is unable to determine the difference between noise and actual image detail.Similar methods and devices for improving the SNR by means of image capture at multiple wavelengths are described in "Multispectral bilateral video fusion", E. P. Bennet et. al, IEEE TRANSACTIONS ON IMAGE PROCESSING, May 2007 and in patent document US2009/0175535. Hence, there is a need in the art for methods and systems for providing a simple and efficient way of providing a color image with an improved SNR.

### Summary of the invention

It is an object of the invention to reduce or eliminate at least one of the drawbacks known in the prior art. In a first aspect the invention may related to a method of processing a color image.

The method may comprise the steps according to claim 1 and dependent claims 2-10. Hence, in contrast with known noise reduction schemes, the noise reduction process according to the invention produces a "composite" low-noise color image wherein the color information is provided by the low frequency components of the RGB image data produced by the RGB pixels and wherein the image detail information is provided by the high frequency components of the infrared image data produced by the infrared pixels. The color image may be obtained by simply adding the low-frequency RGB image data to the high-frequency infrared image data. The invention relies on the fact that the image sensor will produce a relatively low-noise infrared pixel signal enabling effective noise suppression in a color image and substantially improving the SNR of the color image.

In a further aspect, the invention may relate to an image processing apparatus according to claim 11. In another aspect the invention may relate to an imaging system according to claim 12 and dependent claims 13 and 14. The invention may also relate to a computer program product according to claim 15. The invention will be further illustrated with reference to the attached drawings, which schematically will show embodiments according to the invention. It will be understood that the invention is not in any way restricted to these specific embodiments.

### Brief description of the drawings

**Fig. 1** depicts an imaging system according to one embodiment of the invention.
**Fig. 2** depicts a typical color response of a digital camera without an infrared blocking filter.
**Fig. 3** depicts the photo-response of Silicon and an infrared blocking filter.
**Fig. 4** depicts a schematic of (A) an infrared/color filter array and (B) a stacked photodiode structure.
**Fig. 5** depicts a flow diagram of a noise reduction scheme according to one embodiment of the invention.
**Fig. 6** depicts a dual aperture for use in an imaging system according to one embodiment of the invention.
**Fig. 7** depicts the principle of improving the DOF in an imaging system using a double aperture.

### Detailed description

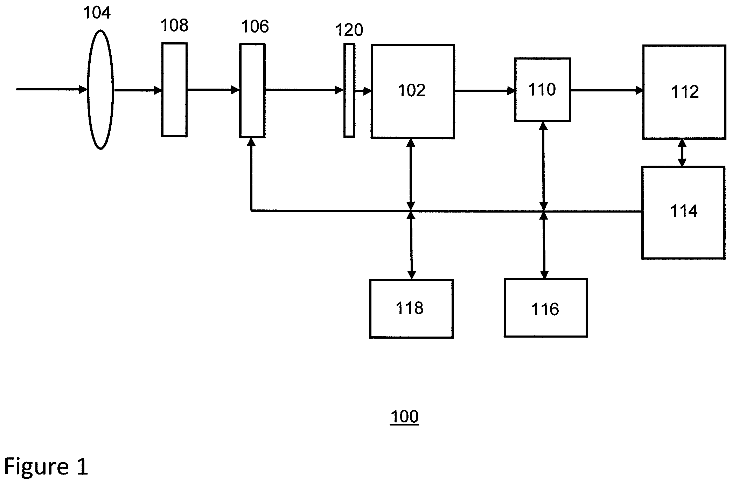

**Fig. 1** illustrates an imaging system **100** according to one embodiment of the invention. The imaging system comprises an image sensor **102**, a lens system **104** for focusing objects in a scene onto the imaging plane of the image sensor, a shutter **106** and an aperture system **108** comprising at least one aperture for allowing light (electromagnetic radiation) of the visible part (e.g. RGB) and the non-visible part (e.g. infrared) of the electromagnetic spectrum to enter the imaging system. The imaging system may be part of a digital camera or integrated in a mobile phone, a webcam and another multimedia device requiring image-capturing functionality.

The exposure of the image sensor to light is controlled by a shutter and the aperture. When the shutter is opened, the aperture controls the amount of light and the degree of collimation of the light exposing the image sensor. The shutter may be a mechanical shutter or, alternatively, the shutter may be an electronic shutter integrated in the image sensor. The image sensor comprises rows and columns of photosensitive sites (pixels) forming a two dimensional pixel array. The image sensor may be a CMOS (Complimentary Metal Oxide Semiconductor) active pixel sensor or a CCD (Charge Coupled Device) image sensor.

When the light is projected by the lens system onto the image sensor, each pixel produces an electrical signal, which is proportional to the electromagnetic radiation (energy) incident on that pixel. In order to obtain color information and to separate the color components of an image which is projected onto the imaging plane of the image sensor, typically a color filter array **120** (CFA) is interposed between the lens and the image sensor. The color filter array may be integrated with the image sensor such that each pixel of the image sensor has a corresponding pixel filter. Each color filter is adapted to pass light of a predetermined color band into the pixel. Usually a combination of red, green and blue (RGB) filters is used, however other filter schemes are also possible, e.g. CYGM (cyan, yellow, green, magenta), RGBE (red, green, blue, emerald), etc.

Each pixel of the exposed image sensor produces an electrical signal proportional to the electromagnetic radiation passed through the color filter associated with the pixel. The array of pixels thus generates image data (a frame) representing the spatial distribution of the electromagnetic energy (radiation) passed through the color filter array. The signals received from the pixels may be amplified using one or more on-chip amplifiers. In one embodiment, each color channel of the image sensor may be amplified using a separate amplifier, thereby allowing to separately control the ISO speed for different colors.

Further, pixel signals may be sampled, quantized and transformed into words of a digital format using one or more Analog to Digital (A/D) converters **110,** which may be integrated on the chip of the image sensor. The digitized image data are processed by a digital signal processor **112** (DSP) coupled to the image sensor, which is configured to perform signal processing functions such as interpolation, filtering, white balance, brightness correction, data compression techniques (e.g. MPEG or JPEG type techniques), etc. The DSP is coupled to a central processor **114,** storage memory **116** for storing captured images and a program memory **118** such as EEPROM or another type of nonvolatile memory comprising one or more software programs used by the DSP for processing the image data or used by a central processor for managing the operation of the imaging system.

In order to increase the sensitivity of the imaging system, the lens system is configured to allow both visible light and infrared radiation or at least part of the infrared radiation to enter the imaging system. To that end, the imaging system does not comprise a filter in front of lens system, which blocks all infrared radiation from entering. The electromagnetic radiation **122** entering the imaging system via the lens system may thus comprise both radiation associated with the visible and the infrared parts of the optical spectrum thereby extending the photo-response of the image sensor to the infrared.

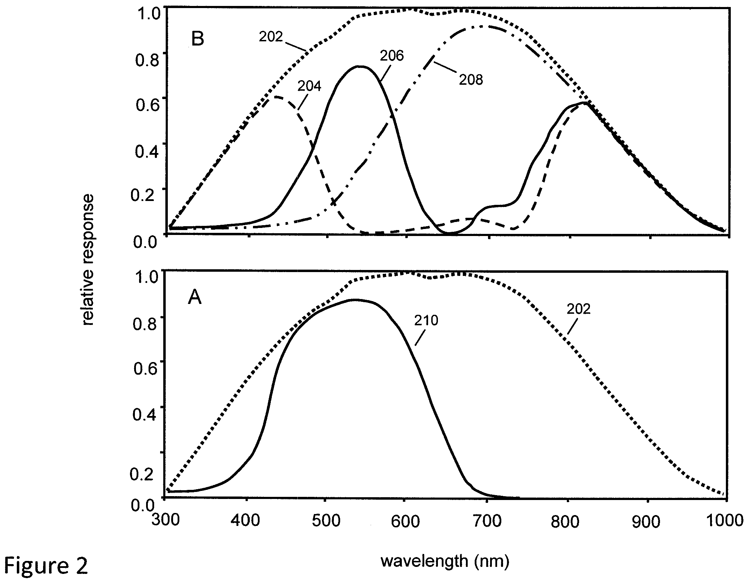

The effect of (the absence of) an infrared blocking filter on a conventional CFA color image sensor is illustrated in **Fig. 2****.** Curve **202** in graphs A and B represents a typical color response of a digital camera without an infrared blocking filter (hot mirror filter). Graph A illustrates the effect of the use of a hot mirror filter. The response of the hot mirror filter **210** limits the spectral response of the image sensor to the visible spectrum thereby substantially limiting the overall sensitivity of the image sensor. If the hot mirror filter is taken away, some of the infrared radiation will pass through the color pixel filters. This effect is depicted by graph B illustrating the photo-responses of the color pixels comprising a blue pixel filter **204,** a green pixel filter **206** and a red pixel filter **208.** The color pixel filters, in particular the red pixel filter, (partly) transmit infrared radiation so that a part of the pixel signal may be attributed to infrared radiation. These infrared contributions may distort the color balance resulting into an image comprising so-called false colors.

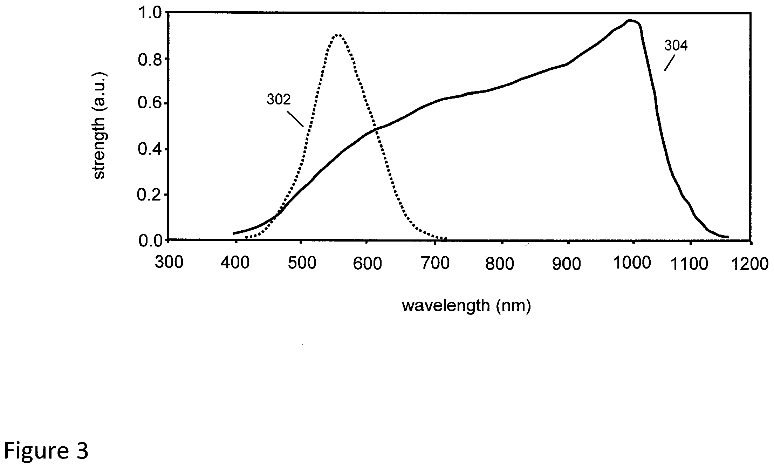

**Fig. 3** depicts a graph comprising the response of the hot mirror filter **302** and the response of Silicon **304,** i.e. the main semiconductor component of an image sensor used in digital cameras. This graph clearly illustrates that the sensitivity of a Silicon image sensor to infrared radiation is approximately four times higher than its sensitivity to visible light.

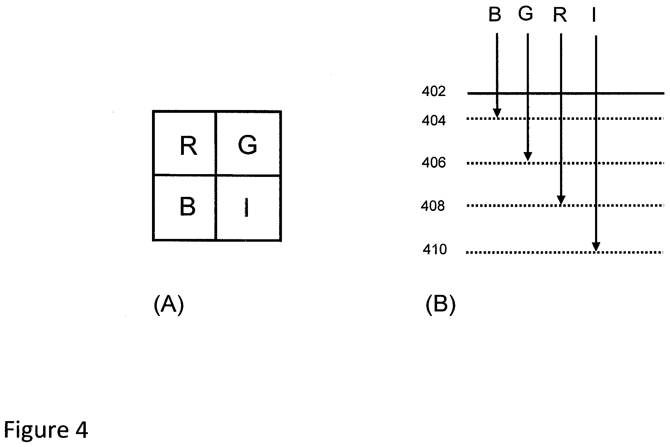

Hence, in order to take advantage of the spectral sensitivity provided by the image sensor, the image sensor **102** in the imaging system in **Fig. 1** comprises one or more pixels for retrieving a pixel signal associated with the infrared spectral energy thereby allowing an imaging system to produce a RGB color image and a relatively low noise infrared image. Examples of such image sensors are depicted in **Fig. 4. Fig. 4** (A) depicts an embodiment wherein the image sensor comprises one or more infrared (I) pixels in conjunction with color pixels. Such infrared pixel may be realized by covering a photo-site with a filter material which substantially blocks visible light and substantially transmits infrared radiation, preferably infrared radiation within the range of approximately 700 through 1100 nm. The infrared transmissive pixel filter in such infrared/color filter array (ICFA) may be realized using well known filter materials having a high transmittance for wavelengths in the infrared band of the spectrum, for example a black polyimide material sold by Brewer Science under the trademark "DARC 400". Methods to realized such filters are described in US2009/0159799. An ICFA may contain blocks of pixels, e.g. 2 x 2 pixels, wherein each block comprises a red, green, blue and infrared pixel. When being exposed, such image ICFA color image sensor may produce a raw mosaic image comprising RGB color information and infrared information. After processing the raw mosaic image using a well-known demosaicking algorithm, a RGB color image and an infrared image may obtained. The sensitivity of such ICFA image color sensor to infrared radiation may be increased by increasing the number of infrared pixels in a block. In one configuration(not shown), the image sensor filter array may for example comprise blocks of sixteen pixels, comprising four color pixels RGGB and twelve infrared pixels.

In yet another embodiment, the image sensor may comprise an array of photo-sites wherein each photo-site comprises a number of stacked photodiodes. Preferably, the stacked photo-site comprises at least four stacked photodiodes responsive to at least the primary colors RGB and infrared respectively. These stacked photodiodes may be integrated into the Silicon substrate of the image sensor. **Fig. 4** (B) depicts a schematic of such stacked photo-site. The photodiodes **404,406,408,410** are located at different depths in the Silicon substrate of the image sensor so that each of the photodiodes is responsive to a different part of the spectrum. The longer the wavelength, the deeper the light will penetrate into the Silicon. The photodiode **404** closest to the light-receiving surface **402** of the image sensor will thus have a spectral response in the blue thereby forming a blue (color) pixel, while the photodiode **410** furthest removed from the surface **402** will have a spectral response in the infrared thus forming an infrared (I) pixel. Such RGBI image sensor comprising vertically stacked photodiodes provides the advantage that the signals of the color pixels allow direct formation of a RGB color image and an infrared image without the need of demosaicking.

The image sensors may comprise one or more amplifiers for amplifying the pixels signals of the color and infrared and/or transparent pixels and one or more electronic shutters for exposing the pixels for a predetermined exposure time. Typically, the amplifier and shutter electronics may be integrated on the image sensor chip. In one embodiment, the color pixels may have an amplifier and/or an electronic shutter for setting the ISO speed and/or exposure time associated with the color pixels. Similarly, the infrared pixels may have an amplifier and/or an electronic shutter for setting the ISO speed and/or exposure time associated with the infrared pixels.

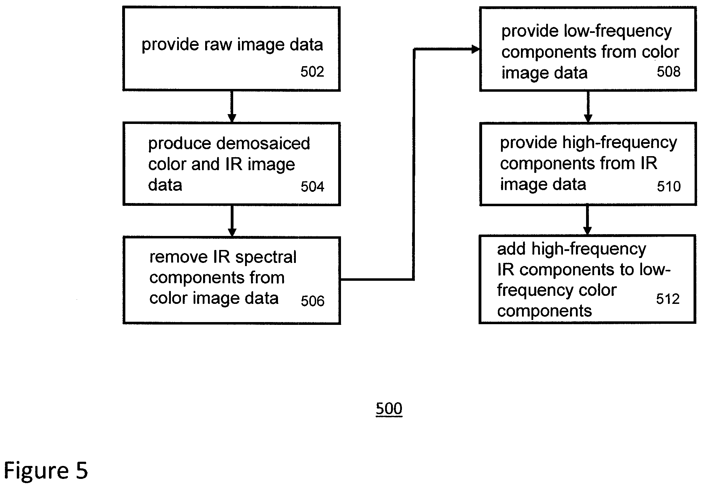

The infrared image data generated by the infrared pixels of the image sensor as depicted in **Fig. 4** may be used to produce a color image with improved SNR characteristics. One embodiment of such process is depicted in more detail in **Fig. 5****.** In this embodiment an imaging system comprising an IFCA color image sensor is used. In the first step of the process the image sensor produces raw image data comprising a mosaic representing the distribution of photon energies in the color (RGB) and infrared spectrum incident to the photo-receiving area of the image sensor (step **502**). The mosaic image data are subsequently demosaicked in three (R'G'B') color images and an infrared image using a well-known demosaicking algorithm (step **504**). The R'G'B' color image may still contain the undesired infrared information, which may be removed by subtracting the infrared image from the color images thereby producing compensated (true) RGB color images (step **506**). Alternatively, the R'G'B' color image may be corrected using a well known white balancing technique. Thereafter, the RGB color images are subjected to a low-pass filter, such as a finite input response filter or an edge-preserving filter, thereby effectively producing a blurred or at least a partly blurred image wherein the contrast information and high frequency noise is suppressed (step **508**). The infrared image data are subjected to a high-pass filter in order to extract the high-frequency components of the infrared image pixel signals, comprising the contrast information of the infrared image (step **510**). In one embodiment (not shown), the infrared image may be further subjected to an edge preserving filtering step. Such edge-preserving filtering step may further enhance the contrast information in the infrared image data. The high-pass filtered infrared image data and the low-pass filtered color image data are subsequently added (blended) in order to form a full color RGB image (step **512**). Hence, in contrast with known noise reduction schemes, the noise reduction process according to the invention produces a "composite" low-noise color image wherein the color information is provided by the low frequency components of the RGB image data produced by the RGB pixels and wherein the image detail information is provided by the high frequency components of the infrared image data produced by the infrared pixels. The color image may be obtained by simply adding the low-frequency RGB image data to the high-frequency infrared image data. The invention relies on the fact that the image sensor will produce a relatively low-noise infrared pixel signal. The method allows effective noise suppression in a color image and may substantially improve the SNR of the color image. In one variant, the RBG color image may be further transformed to a suitable color space, for example an LAB color space, which is based on the CIE 1931 XYZ color space defined by the Commission International de l'éclairage and designed to approximate human vision. Thereafter, the high frequency infrared components are added to the L (lightness contrast) component of the LAB color image.

The method may be implemented as a noise suppression function in the DSP of the imaging system. Typically, the method will be implemented as a software program or as a combination of hardware circuitry and a software program.

Although the method depicted in **Fig. 5** is described using an ICFA-type image sensor for obtaining the infrared image data, the invention may also be used with other image sensors. In one embodiment, the method depicted in **Fig. 5** may also be used with a RGBI image sensor comprising vertically stacked photodiodes as described with reference to **Fig. 4** (B). Using such image sensor provides the advantages that a demosaicking step **504** and the color compensation step **506** as described with reference to **Fig. 5** are not required.

In a further embodiment (not shown), a color image sensor comprising one or more panchromatic or transparent pixels may be used. Such color image sensors are for example known from US2007/0153335, US2007/0145273 or WO2007/01598 and comprise (blocks of) RGB pixels and one or more transparent (T) or panchromatic pixels which are sensitive to both the visible and the non-visible (infrared) spectrum. After capturing raw image data using such image sensor, the color balance of the captured RGB data may first be restored using a known white balancing technique as disclosed for example in US2007/0153335. Thereafter, the RGB image data are filtered using a low pass filter and the image data associated with the transparent pixels (comprising both a RGB part and an infrared part) are filtered using a high-pass filter. The high frequency components of the transparent pixel signals are subsequently added to the low pass filtered RGB image data in order to form a color image having an improved SNR.

The noise reduction method may allow further improvement of the image quality under low (visible) light conditions. For that purpose, in a further embodiment, the color pixels of the image sensor may be set to a high ISO speed (e.g. as defined by ISO standard 12232:2006), e.g. between 3200 and 6400, in order to provide a high-noise color image under low light conditions. Setting the color pixels to a higher ISO rating effectively means that the signal gain of amplifier associated with the color pixels is increased.

The infrared pixels of the image sensor may be set to a low ISO speed, e.g. between 400 and 1600 for producing a low-noise infrared image. In one embodiment, the ratio between the high and low ISO value may set between 2 and 8. Subsequent processing of the raw image data captured under low light conditions by the image sensor in the dual ISO mode using the method as described with reference to **Fig. 5****,** will result in a color image with improved SNR. The method allows optimal use of the intrinsic infrared sensitivity of the image sensor and does not require complex processing.

In a further embodiment, the method in **Fig. 5** may be used for reducing the effect of camera shake, in particular when using relatively long exposure times. In that case the sensitive infrared pixels may be set to the same sensitivity (the same ISO speed) as the color pixels. The exposure time for the infrared pixels however may be significantly reduced with respect to the exposure time of the color pixels. For example, if the exposure time for the color pixels is set to 1/4 second, the exposure time for the infrared pixels is set to 1/60 of a second thereby providing a high-contrast infrared image. Subsequent processing of the raw image data produced by the image sensor using the method depicted in **Fig. 5** will result in a color image with reduced blur.

The exposure times for the color pixels and the infrared pixels may be controlled by using a first electronic shutter for the color pixels and a second electronic shutter for the infrared pixels. Alternatively, the color image and the infrared image may be obtained by capturing two subsequent images in time, a first image associated with a relatively long exposure time and a second image associated with a relatively short exposure time.

Hence, using the noise reduction method in combination with an image sensor configured to independently control the signal gain (ISO speed) and the exposure time of the color pixels and the infrared pixels respectively, allows the imaging system to use a dual ISO and/or a dual exposure mode for increasing SNR under low-light conditions and/or for reducing motion blur.

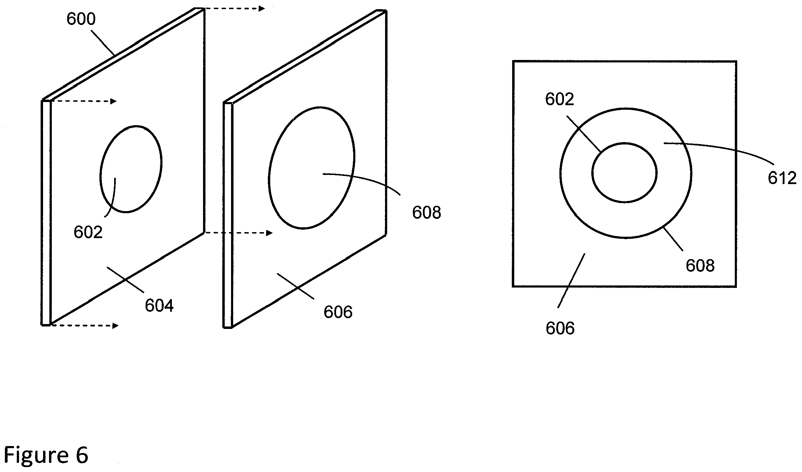

In yet a further embodiment, the noise reduction method may be used in an imaging system comprising a dual-aperture. Such dual-aperture may be used for improving the depth of field (DOF) of a camera. The DOF determines the range of distances from the camera that are in focus when the image is captured. The wider the aperture (the more light received) the more limited the DOF. One embodiment of such dual aperture is schematically depicted in **Fig. 6****.** The dual aperture system **600** comprises a substrate **602** with an opening **604** (e.g. a circular hole) in the middle. The substrate material may be transparent to at least visible radiation and may be coated by a thin film filter material **606** such as a dielectric filter. In one embodiment the substrate is coated with a dichroic filter which reflects radiation in the infra-red spectrum and transmits radiation in the visible spectrum. Dichroic filters also referred to as interference filters are well known in the art and typically comprise a number of thin-film dielectric layers of specific thicknesses which are configured to reflect infra-red radiation (e.g. radiation having a wavelength between approximately 750 to 1250 nanometers) and to transmit radiation in the visible part of the spectrum.

The substrate may be positioned before the lens in the imaging system using a holder **604** of an opaque material.
The holder comprises a circular opening **608** and is configured to receive and position the substrate such that the opening in the substrate is located in the center of the circular opening of the holder. As the diameter of the holder opening is large than the diameter of the substrate opening, part of the filter coated substrate is exposed by radiation entering the imaging system via the lens. The exposed part forms a concentric ring **610** around the substrate hole.

The multi-aperture may be formed by using several separate aperture elements, e.g. a first transparent substrate comprising a first circular filter coating in optical alignment with a second transparent substrate comprising a second circular filter and the one or more lenses of the optical system thereby effectively providing the same effect as the dual aperture system as described in relation with **Fig. 6****.** Alternatively, the aperture system may be integrated with lens by using the lens as a substrate for the first and second filter coatings forming the aperture system.

In a variant, the dual aperture system may be formed by two or more lens systems, e.g. a first lens system with associated first aperture system and a second lens system with associated second aperture system.

Visible and the non-visible (infrared) spectral energy enter the imaging system via the dual aperture system. As the infrared blocking filter used in the aperture system is transparent for visible light, the amount of radiation in the visible spectrum entering the imaging system is controlled by the diameter of the holder opening. On the other hand, as the filter blocks all or at east a substantial part of the infrared radiation, the amount of radiation in the infrared spectrum entering the imaging system is controlled by the diameter of the opening in the substrate, which is smaller than the diameter of the holder opening.

Hence, contrary to imaging systems comprising a single aperture, a dual aperture imaging system uses an aperture system comprising two (or more) apertures of different sizes for controlling the amount and the collimation of radiation in different bands of the spectrum exposing the image sensor. A dual aperture allows a simple mobile phone camera with a typical f-number of 7 (e.g. focal length f of 7 mm and a diameter of 1 mm) to improve its DOF via a second aperture with a f-number varying e.g. between 14 for a diameter of 0,5 mm up to 70 or more for diameters equal to or less than 0,2 mm, wherein the f-number is defined by the ratio of the focal length f and the effective diameter of the aperture. Preferable implementations include optical systems comprising an f-number for the visible radiation of approximately 2 to 4 for increasing the sharpness of near objects in combination with an f-number for the infrared aperture of approximately 16 to 22 for increasing the sharpness of distance objects.

The aperture system may comprise a transparent substrate with two different thin-film filters: a first circular thin-film filter in the center of the substrate forming a first aperture transmitting radiation in a first band of the spectrum and a second thin-film filter formed (e.g. in a concentric ring) around the first filter transmitting radiation in a second band of the spectrum. The first filter may be configured to transmit both visible and infrared radiation and the second filter may be configured to reflect infrared radiation and to transmit visible radiation. The outer diameter of the outer concentric ring may be defined by an opening in an opaque aperture holder or, alternatively, by the opening defined in an opaque thin film layer deposited on the substrate which both blocks infra-read and visible radiation.

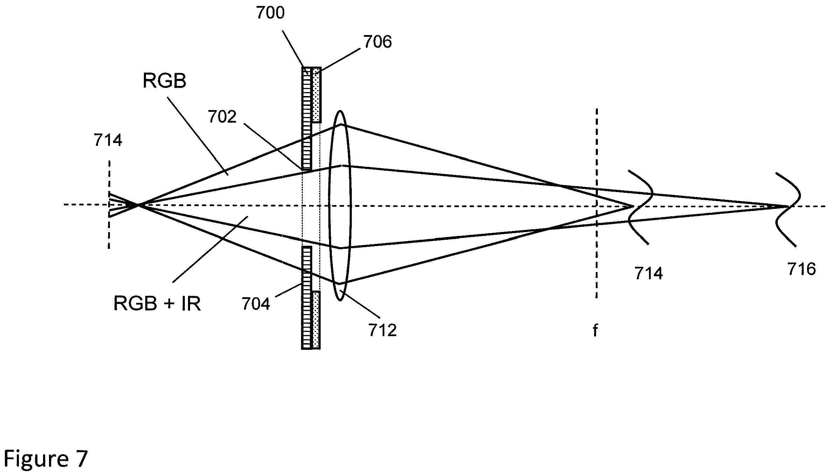

The dual aperture system as depicted in **Fig. 6** may be used to improve the DOF of the imaging system. The principle of improving the DOF is schematically depicted in **Fig. 7****.** Visible and infrared spectral energy enters the imaging system via the dual aperture system comprising a filter-coated transparent substrate **700** with a circular hole **702** of a predetermined diameter. The filter coating **704** may transmit visible radiation and reflect infrared radiation. An opaque covering **706** may comprise a circular opening with a diameter, which is larger than the diameter of the hole **702.** The cover may comprise a thin film coating which reflects both infrared and visible radiation or may be part of a holder for holding and positioning the substrate **700** in the optical system. Visible and infrared spectral energy passes the aperture system and is subsequently projected by the lens **712** onto the imaging plane **714** of an image sensor, comprising pixels for obtaining image data associated with the visible spectral energy and pixels for obtaining image data associated with the non-visible (infrared) spectral energy, such as an ICFA color image array or an image sensor comprising stacked RGBI photo-sites. The pixels of the image sensor may thus receive a first (relatively) wide-aperture image signal **716** associated with visible spectral energy with having a limited DOF overlaying a second small-aperture image signal **718** associated with the infrared spectral energy having a large DOF. Hence, objects **714** close to the plane of focus f of the lens are projected onto the image plane with relatively small defocus blur by the visible radiation, while objects **716** further located from the plane of focus are projected onto the image plane with relatively small defocus blur by the infrared radiation.

Upon exposure, the image sensor captures both visible and infrared image signals simultaneously in one image frame. If an ICFA color image sensor is used, the DSP may separate the color and infrared pixel signals in the captured raw mosaic image using e.g. a demosaicking algorithm. (not shown). Thereafter, the (visible) color image data and the (non-visible) infrared image data may subjected to a noise reduction method as described with reference to **Fig. 5****,** thereby producing a color image with improved DOF and SNR. It is submitted that the skilled person may easily extend the principle illustrated in **Fig. 7** to a multi-aperture system which may be configured to project objects at various distances from the focus plane with a small defocus blur onto the image plane of the image sensor.

When using an imaging system comprising a dual aperture as describe with reference **Fig. 6** and **7****,** infrared radiation received by the image sensor is mainly transmitted by the red and infrared pixel filters. Hence, the red color component of the captured image frame comprises both a high-amplitude visible red signal and sharp, low-amplitude non-visible infrared signal. Typically, the infrared component will be 8 to 16 times lower than the visible red component. The red balance may be adjusted to compensate for the slight distortion created by the presence of infrared. The sharp, small-aperture infrared image signal may be obtained from the high pass filtered components of the red pixel and the infrared pixel signals. This signal may be used to both increase the DOF and the SNR of the color image.

The infrared image signals produced by the infrared pixels the image sensor may be used to efficiently eliminate the color distortion in the color pixels created by the infrared radiation by subtracting these signals from each color component of the color image signal. Using an image sensor with a RGBI filter array or a stacked RGBI image sensor in combination with a multi-apertures system thus allows the generation of a color image with improved DOF and SNR and color balance.

In a further embodiment, the dual aperture imaging system as describes with reference to **Fig. 6** and **7** may also use a color image sensor comprising color pixels and transparent or panchromatic pixels. As the small-aperture infrared signal is a relatively low-amplitude signal compared to the large-aperture color signal, the infrared contribution in the color pixel signals will be relatively small. In order to remove the dominant color component in the image data produced by the transparent pixels, the color image data produced by the color pixels may used. Subtracting the color image data from the image data produced by the transparent pixels will provide infrared image data which are suitable for use in the noise reduction method as described with reference to **Fig. 5****.**

Further, as the relatively small size of the infrared aperture produces a relatively small infrared image signal, the filtered high-frequency components may be amplified in proportion to the ratio of the visible light aperture relative to the infrared aperture.

Combining a dual aperture as described with reference to **Fig. 6** and **7** with the noise reduction scheme as described with reference to **Fig. 5** provides an imaging system with a fixed focus lens (e.g. a camera in a mobile phone) to have a wide aperture, hence effectively operating in lower light situations, while at the same time to have a greater DOF and SNR resulting in sharper pictures.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. Method of providing a low noise color image, the method comprising the steps of:
simultaneously exposing an image sensor to visible spectral energy using a first aperture and non-visible spectral energy using a second aperture that is smaller than the first aperture, said image sensor comprising an array of pixels, wherein the array of pixels comprise first pixels configured for obtaining first image data associated with said visible spectral energy and second pixels configured for obtaining second image data associated with said non-visible spectral energy ;
generating first and second image data;
subjecting said first image data to a low-pass filter and said second image data to a high-pass filter;
forming a color image by adding at least part of the high frequency components of said second image data to at least part of the low frequency components of said first image data.

2. Method according to claim 1, wherein said first pixels configured for obtaining said first image data comprise one or more color pixel filters configured for transmitting at least part of said visible spectral energy.

3. Method according to claims 1 or 2, wherein said second pixels configured for obtaining said second image data comprise one or more infrared transmissive pixels filters configured for transmitting a substantial part of said non-visible spectral energy and blocking a substantial part of said visible spectral energy.

4. Method according to claim 1, wherein said pixels for obtaining first and second image data comprise two or more vertically stacked photo-sensors, at least one of said photo-sensors being responsive to a predetermined part of said visible spectral energy and at least one of said photo-sensor being responsive to a predetermined part of said non-visible spectrum.

5. Method according to claim 1, wherein said first aperture is adapted to control exposure of said image sensor to at least part of said non-visible spectral energy and wherein said second aperture is adapted to control exposure of said image sensor to at least part of said visible spectral energy.

6. Method according to claims 4 or 5, wherein said method further comprises the step of amplifying the filtered high-frequency components of said second image data in proportion to the ratio of the first aperture relative to the second aperture.

7. Method according to any of claims 1-6, said method further comprising the step of amplifying one or more image sensor signals associated with said visible spectral energy according to at least a first ISO speed value and amplifying one or more image sensor signals associated with said non-visible spectral energy according to at least a second ISO speed value, wherein said first ISO speed value is larger than said second ISO speed value.

8. Method according to claim 7 wherein the ratio between said first and second ISO speed value is selected between 2 and 8.

9. Method according to any of claims 1-8, said method further comprising the step of setting the exposure time for exposing one or more pixels associated with said non-visible spectral energy to a lower value than the exposure time for exposing one or more pixels associated with said visible spectral energy.

10. Method according to any of claims 1-3, said method further comprising the steps of:
providing mosaic image data generated by said image sensor,
generating on the basis of said image data at least one or more first color image data associated with one or more color pixels and second image data associated with said infrared pixels using a demosaicing algorithm.

11. Image processing apparatus, comprising:
an input for receiving image data generated by simultaneously exposing first pixels of an image sensor to visible spectral energy using a first aperture and second pixels of the image sensor to non-visible spectral energy using a second aperture that is smaller than the first aperture, said image data comprising first image data associated with visible spectral energy and second image data associated with non-visible spectral energy;
a noise reduction unit configured to subject said first image data to a low-pass filter and said second image data to a high-pass filter;
a blending unit forming a color image, the blending unit being configured to add at least part of said high-pass filtered second image data to at least part of said low-pass filtered first image data.

12. Imaging system, comprising:
an image sensor configured for exposure to visible spectral energy and non-visible spectral energy, said image sensor comprising first pixels configured for obtaining first image data associated with said visible spectral energy and second pixels configured for obtaining second image data associated with said non-visible spectral energy; an aperture system adapted to control simultaneous exposure of the image sensor to the visible and non-visible spectral energy, and,
an image processing apparatus according to claim 11.

13. Imaging system according to claim 12, wherein said aperture system comprises at least a first aperture adapted to control exposure of the image sensor to at least part of said non-visible spectral energy and at least a second aperture adapted to control exposure of said image sensor to at least part of said visible spectral energy.

14. Imaging system according to claims 12 or 13, wherein the image sensor comprises
a pixel array defining one or more color pixels sensitive to visible spectral energy and one or more infrared pixels sensitive to non-visible spectral energy;
at least one first amplifier associated with at least a part of said color pixels for setting ISO speed associated with said color pixels to a first ISO speed value and a second amplifier associated with at least a part of said infrared pixels for setting the ISO speed associated with said infrared pixels to a second ISO speed value, said first ISO speed value being larger than said second ISO speed value.

15. Computer program product processing a color image, said computer program product comprising software code portions configured for, when run in the memory of a computer system, executing the method steps according to any of claims 1-10.

## Patentansprüche

1. Verfahren zum Bereitstellen eines Farbbildes mit geringem Rauschen, wobei das Verfahren die Schritte aufweist:
gleichzeitiges Belichten eines Bildsensors mit sichtbarer spektraler Energie unter Verwendung einer ersten Öffnung und mit nicht-sichtbarer spektraler Energie unter Verwendung einer zweiten Öffnung, die kleiner ist als die erste Öffnung, wobei der Bildsensor ein Pixelfeld aufweist, wobei das Pixelfeld erste Pixel, die zum Erhalten erster Bilddaten, die der sichtbaren spektralen Energie zugeordnet sind, ausgebildet sind, und zweite Pixel aufweist, die zum Erhalten zweiter Bilddaten, die der nicht-sichtbaren spektralen Energie zugeordnet sind, ausgebildet sind;
Erzeugen erster und zweiter Bilddaten;
Unterziehen der ersten Bilddaten einem Tiefpass-Filter und der zweiten Bilddaten einem Hochpass-Filter;
Bilden eines Farbbildes durch Hinzufügen zumindest eines Teils der Hochfrequenz-Komponenten der zweiten Bilddaten zu zumindest einem Teil der Niederfrequenz-Komponenten der ersten Bilddaten.

2. Verfahren nach Anspruch 1, wobei die ersten Pixel, die zum Erhalten der ersten Bilddaten ausgebildet sind, ein oder mehrere Farb-Pixel-Filter aufweisen, die zum Transmittieren zumindest eines Teils der sichtbaren spektralen Energie ausgebildet sind.

3. Verfahren nach Ansprüchen 1 oder 2, wobei die zweiten Pixel, die zum Erhalten der zweiten Bilddaten ausgebildet sind, einen oder mehrere Infrarot-transmissive Pixel-Filter aufweisen, die zum Transmittieren eines wesentlichen Teils der nicht-sichtbaren spektralen Energie und Blockieren eines wesentlichen Teils der sichtbaren spektralen Energie ausgebildet sind.

4. Verfahren nach Anspruch 1, wobei die Pixel zum Erhalten erster und zweiter Bilddaten zwei oder mehrere vertikal gestapelte Foto-Sensoren aufweisen, wobei zumindest einer der Foto-Sensoren auf einen vorbestimmten Teil der sichtbaren spektralen Energie anspricht, und wobei zumindest einer der Foto-Sensoren auf einen vorbestimmten Teil des nicht-sichtbaren Spektrums anspricht.

5. Verfahren nach Anspruch 1, wobei die erste Öffnung daran angepasst ist, die Belichtung des Bildsensors mit zumindest einem Teil der nicht-sichtbaren spektralen Energie zu steuern, und wobei die zweite Öffnung daran angepasst ist, die Belichtung des Bildsensors mit zumindest einem Teil der sichtbaren spektralen Energie zu steuern.

6. Verfahren nach Ansprüchen 4 oder 5, wobei das Verfahren weiterhin den Schritt eines Verstärkens der gefilterten Hochfrequenz-Komponenten der zweiten Bilddaten in Proportion zu dem Verhältnis der ersten Öffnung relativ zur zweiten Öffnung aufweist.

7. Verfahren nach irgendeinem der Ansprüche 1 - 6, wobei das Verfahren weiterhin den Schritt eines Verstärkens eines oder mehrerer Bildsensor-Signale, die der sichtbaren spektralen Energie zugeordnet sind, gemäß zumindest einem ersten ISO-Geschwindigkeitwert und eines Verstärkens einer oder mehrerer Bildsensor-Signale, die der nicht-sichtbaren spektralen Energie zugeordnet sind, gemäß zumindest einem zweiten ISO-Geschwindigkeitwert aufweist, wobei der erste ISO-Geschwindigkeitwert größer ist als der zweite ISO-Geschwindigkeitwert.

8. Verfahren nach Anspruch 7, wobei das Verhältnis zwischen dem ersten und zweiten ISO-Geschwindigkeitwert zwischen 2 und 8 ausgewählt ist.

9. Verfahren nach irgendeinem der Ansprüche 1 - 8, wobei das Verfahren weiterhin den Schritt eines Einstellens der Belichtungszeit zum Belichten eines oder mehrerer Pixel, die der nicht-sichtbaren spektralen Energie zugeordnet sind, auf einen niedrigeren Wert als die Belichtungszeit zum Belichten eines oder mehrerer Pixel, die der sichtbaren spektralen Energie zugeordnet sind, aufweist.

10. Verfahren nach irgendeinem der Ansprüche 1 - 3, wobei das Verfahren weiterhin die Schritte aufweist:
Bereitstellen von Raster-Bilddaten, die durch den Bildsensor erzeugt werden, Erzeugen, auf der Basis der Bilddaten, zumindest eines oder mehrerer erster Farbbilddaten, die einem oder mehreren Farbpixeln zugeordnet sind, und zweiter Bilddaten, die den Infrarot-Pixeln zugeordnet sind, unter Verwendung eines Entrasterungs-Algorithmus.

11. Bildbearbeitungsvorrichtung, mit:
einem Eingang zum Empfangen von Bilddaten, die durch gleichzeitiges Belichten erster Pixel eines Bildsensors mit sichtbarer spektraler Energie unter Verwendung einer ersten Öffnung und zweiter Pixel des Bildsensors mit nicht-sichtbarer spektraler Energie unter Verwendung einer zweiten Öffnung erzeugt sind, die kleiner ist als die erste Öffnung, wobei die Bilddaten erste Bilddaten, die sichtbarer spektraler Energie zugeordnet sind, und zweite Bilddaten aufweisen, die nicht-sichtbarer spektraler Energie zugeordnet sind;
einer Rauschreduzier-Einheit, die dazu ausgebildet ist, die ersten Bilddaten einem Tiefpass-Filter und die zweiten Bilddaten einem Hochpass-Filter zu unterziehen;
einer Mischeinheit, die ein Farbbild bildet, wobei die Mischeinheit dazu ausgestaltet ist, zumindest einen Teil der Hochpass-gefilterten zweiten Bilddaten zu zumindest einem Teil der Tiefpass-gefilterten ersten Bilddaten hinzuzufügen.

12. Bildgebungssystem, mit:
einem Bildsensor, der zur Belichtung mit sichtbarer spektraler Energie und nicht-sichtbarer spektraler Energie ausgebildet ist, wobei der Bildsensor erste Pixel, die zum Erhalten erster Bilddaten ausgebildet ist, die der sichtbaren spektralen Energie zugeordnet sind, und zweite Pixel aufweist, die zum Erhalten zweiter Bilddaten ausgebildet sind, die der nicht-sichtbaren spektralen Energie zugeordnet sind; einem Öffnungssystem, das daran angepasst ist, eine gleichzeitige Belichtung des Bildsensors mit der sichtbaren und der nicht-sichtbaren spektralen Energie zu steuern, und
einer Bildbearbeitungsvorrichtung gemäß Anspruch 11.

13. Bildgebungssystem nach Anspruch 12, wobei das Öffnungssystem zumindest eine erste Öffnung , die daran angepasst ist, die Belichtung des Bildsensors mit zumindest einem Teil der nicht-sichtbaren spektralen Energie zu steuern, und zumindest eine zweite Öffnung aufweist, die daran angepasst ist, die Belichtung des Bildsensors mit zumindest einem Teil der sichtbaren spektralen Energie zu steuern.

14. Bildgebungssystem nach Ansprüchen 12 oder 13, wobei der Bildsensor aufweist:
ein Pixelfeld, das ein oder mehrere Farbpixel, die für sichtbare spektrale Energie empfindlich sind, und ein oder mehrere Infrarot-Pixel definiert, die für nicht-sichtbare spektrale Energie empfindlich sind;
zumindest einen ersten Verstärker, der zumindest einem Teil der Farbpixel zugeordnet ist, zum Einstellen einer ISO-Geschwindigkeit, die den Farbpixeln zugeordnet ist, auf einen ersten ISO-Geschwindigkeitswert, und einen zweiten Verstärker, der zumindest einem Teil der Infrarot-Pixel zugeordnet ist, zum Einstellen der ISO-Geschwindigkeit, die den Infrarot-Pixeln zugeordnet ist, auf einen zweiten ISO-Geschwindigkeitswert, wobei der erste ISO-Geschwindigkeitswert größer ist als der zweite ISO-Geschwindigkeitswert.

15. Computerprogrammprodukt, das ein Farbbild bearbeitet, wobei das Computerprogrammprodukt Software-Code-Abschnitte aufweist, die, wenn sie im Speicher eines Computersystems laufen, zum Ausführen der Verfahrensschritte gemäß irgendeinem der Ansprüche 1 - 10 ausgebildet sind.

## Revendications

1. Procédé de fourniture d'une image couleur à faible bruit, le procédé comprenant les étapes consistant à :
exposer simultanément un capteur d'image à une énergie spectrale visible à l'aide d'une première ouverture et à une énergie spectrale invisible à l'aide d'une seconde ouverture qui est plus petite que la première ouverture, ledit capteur d'image comprenant une matrice de pixels, dans lequel la matrice de pixels comprend des premiers pixels configurés pour obtenir des premières données d'image associées à ladite énergie spectrale visible et des seconds pixels configurés pour obtenir des secondes données d'image associées à ladite énergie spectrale invisible ;
générer des premières et secondes données d'image ;
soumettre lesdites premières données d'image à un filtre passe-bas et lesdites secondes données d'image à un filtre passe-haut ;
former une image couleur en ajoutant au moins une partie des composantes haute fréquence desdites secondes données d'image à au moins une partie des composantes basse fréquence desdites premières données d'image.

2. Procédé selon la revendication 1, dans lequel lesdits premiers pixels configurés pour obtenir lesdites premières données d'image comprennent un ou plusieurs filtres de pixels couleur configurés pour transmettre au moins une partie de ladite énergie spectrale visible.

3. Procédé selon les revendications 1 ou 2, dans lequel lesdits seconds pixels configurés pour obtenir lesdites secondes données d'image comprennent un ou plusieurs filtres de pixels transmissifs à l'infrarouge configurés pour transmettre une partie importante de ladite énergie spectrale invisible et bloquer une partie importante de ladite énergie spectrale visible.

4. Procédé selon la revendication 1, dans lequel lesdits pixels pour obtenir des premières et secondes données d'image comprennent deux photocapteurs ou plus empilés à la verticale, au moins l'un desdits photocapteurs étant une réponse à une partie prédéterminée de ladite énergie spectrale visible et au moins l'un desdits photocapteurs étant sensible à une partie prédéterminée dudit spectre invisible.

5. Procédé selon la revendication 1, dans lequel ladite première ouverture est adaptée pour réguler une exposition dudit capteur d'image à au moins une partie de ladite énergie spectrale invisible et dans lequel ladite seconde ouverture est adaptée pour réguler une exposition dudit capteur d'image à au moins une partie de ladite énergie spectrale visible.

6. Procédé selon les revendications 4 ou 5, dans lequel ledit procédé comprend en outre l'étape consistant à amplifier des composantes haute fréquence filtrées desdites secondes données d'image proportionnellement au rapport entre la première ouverture et la seconde ouverture.

7. Procédé selon l'une quelconque des revendications 1 à 6, ledit procédé comprenant en outre l'étape consistant à amplifier un ou plusieurs signaux de capteur d'image associés à ladite énergie spectrale visible selon au moins une première valeur de vitesse ISO et à amplifier un ou plusieurs signaux de capteur d'image associés à ladite énergie spectrale invisible selon au moins une seconde valeur de vitesse ISO, dans lequel ladite première vitesse ISO est plus grande que ladite seconde valeur de vitesse ISO.

8. Procédé selon la revendication 7, dans lequel le rapport entre lesdites première et seconde valeurs de vitesse ISO est choisi entre 2 et 8.

9. Procédé selon l'une quelconque des revendications 1 à 8, ledit procédé comprenant en outre l'étape consistant à régler le temps d'exposition pour exposer un ou plusieurs pixels associés à ladite énergie spectrale invisible à une valeur inférieure au temps d'exposition pour exposer un ou plusieurs pixels associés à ladite énergie spectrale visible.

10. Procédé selon l'une quelconque des revendications 1 à 3, ledit procédé comprend en outre les étapes consistant à :
fournir des données d'image en mosaïque générées par ledit capteur d'image,
générer sur la base desdites données d'image au moins une ou plusieurs premières données d'image couleur associées à un ou plusieurs pixels couleur et des secondes données d'image associées auxdits pixels infrarouges à l'aide d'un algorithme de démosaïquage.

11. Appareil de traitement d'image, comprenant :
une entrée pour recevoir des données d'image générées en exposant simultanément des premiers pixels d'un capteur d'image à visible à l'aide d'une première ouverture et des seconds pixels du capteur d'image à une énergie spectrale invisible à l'aide d'une seconde ouverture qui est plus petite que la première ouverture, lesdites données d'image comprenant des premières données d'image associées à l'énergie spectrale visible et des secondes données d'image associées à l'énergie spectrale invisible ;
une unité de réduction de bruit configurée pour soumettre lesdites premières données d'image à un filtre passe-bas et lesdites secondes données d'image à un filtre passe-haut ;
une unité de mélange formant une image couleur, l'unité de mélange étant configurée pour ajouter au moins une partie desdites secondes données d'image à filtrage passe-haut à au moins une partie desdites premières données d'image à filtrage passe-bas.

12. Système d'imagerie, comprenant :
un capteur d'image configuré pour une exposition à une énergie spectrale visible et une énergie spectrale invisible, ledit capteur d'image comprenant des premiers pixels configurés pour obtenir des premières données d'image associées à ladite énergie spectrale visible et des seconds pixels configurés pour obtenir des secondes données d'image associées à ladite énergie spectrale invisible ; un système d'ouverture adapté pour réguler une exposition simultanée du capteur d'image à l'énergie spectrale visible et invisible, et,
un appareil de traitement d'image selon la revendication 11.

13. Système d'imagerie selon la revendication 12, dans lequel ledit système d'ouverture comprend au moins une première ouverture adaptée pour réguler une exposition du capteur d'image à au moins une partie de ladite énergie spectrale invisible et au moins une seconde ouverture adaptée pour réguler une exposition dudit capteur d'image à au moins une partie de ladite énergie spectrale visible.

14. Système d'imagerie selon les revendications 12 ou 13, dans lequel le capteur d'image comprend
une matrice de pixels définissant un ou plusieurs pixels couleur sensibles à l'énergie spectrale visible et un ou plusieurs pixels infrarouges sensibles à l'énergie spectrale invisible ;
au moins un premier amplificateur associé à au moins une partie desdits pixels couleur pour régler une vitesse ISO associée auxdits pixels couleur à une première valeur de vitesse ISO et un second amplificateur associé à au moins une partie desdits pixels infrarouges pour régler la vitesse ISO associée auxdits pixels infrarouges à une seconde valeur de vitesse ISO, ladite première valeur de vitesse ISO étant plus grande que ladite seconde valeur de vitesse ISO.

15. Produit de programme d'ordinateur traitant une image couleur, ledit produit de programme d'ordinateur comprenant des portions de code de logiciel configurées pour, lorsqu'elles sont exécutées dans la mémoire d'un système d'ordinateur, exécuter les étapes de procédé selon l'une quelconque des revendications 1 à 10.
